# FASCICULE DE BREVET EUROPEEN

(11) **EP 1 750 972 B1**
(45) Date de publication et mention de la délivrance du brevet: **17.12.2008**
(21) Numéro de dépôt: 05762648.3
(22) Date de dépôt: 04.05.2005
(51) Int. Cl.: B60Q 1/04, F21V 15/04

(54) **PROJECTEUR DE VEHICULE AUTOMOBILE PERFECTIONNE**
VERBESSERTE SCHEINWERFER FÜR KRAFTFAHRZEUGE
IMPROVED MOTOR VEHICLE HEADLIGHT

(30) Priorité: 18.05.2004 FR 0450975
(43) Date de publication de la demande: 14.02.2007
(73) Titulaire: Renault SAS, 92100 Boulogne Billancourt (FR)
(72) Inventeur: FREYTRICH, Jean-Pierre, F-92130 Issy Les Moulineaux (FR)
(86) Numéro de dépôt international: PCT/FR2005/050302
(87) Numéro de publication internationale: WO 2005/113288

(56) Documents cités:
- EP-A- 1 122 126
- EP-A- 1 288 068
- EP-A- 1 346 874

## Description

L'invention concerne un projecteur de véhicule automobile perfectionné, et plus particulièrement un projecteur comportant un boitier destiné à recevoir au moins un premier moyen d'éclairage et fermé par une première glace, adapté au choc piéton.

Il est essentiel qu'un véhicule comporte des moyens d'absorption d'un choc de façon à protéger les passagers du véhicule. Mais il est également important que le véhicule comprenne aussi des moyens de protection des piétons, afin que ceux-ci présentent des lésions qui soient les moins nombreuses et les moins graves possible en cas de choc avec un véhicule. Cependant les dispositifs prévus à cet effet doivent pouvoir être intégrés à l'architecture du véhicule. De plus, ces dispositifs doivent aussi permettre une réparation simple et peu onéreuse du véhicule.

Ainsi, on connait par la publication FR-A-2844758 un projecteur de véhicule automobile, muni de moyens d'absorption d'énergie, comportant un boîtier fermé par une glace à l'intérieur duquel se trouve une source lumineuse. Le boitier est relié à la structure par une liaison déformable plastiquement. Ainsi, en cas de choc, la glace et le boîtier coulissent vers l'arrière du véhicule afin d'absorber au moins une partie de l'énergie. Cependant, cette solution présente des inconvénients. Tout d'abord, le boîtier se déplaçant dans son ensemble vers l'arrière, il est nécessaire de prévoir beaucoup de place en arrière du projecteur. ce qui n'est pas aisé dans cette zone du véhicule, puisqu'on y trouve des éléments rigides ou peu déformables ou pouvant immobiliser le véhicule en cas de destruction. Cet inconvénient est d'autant plus gênant sur les petits véhicules. De plus, il est nécessaire par la suite de remplacer l'ensemble du projecteur.

On connait aussi par la publication EP-A-1288068 un projecteur de véhicule automobile comportant un boîtier fermé par une glace, dont les parois latérales sont pliées en accordéon. Ainsi, en cas de choc, la glace se déplace vers l'arrière en écrasant les parois latérales du boîtier, ce qui permet d'absorber l'énergie du choc. Cependant, cette solution présente aussi un inconvénient. Pour réparer le véhicule après le choc, il est nécessaire de changer le projecteur dans son ensemble, ce qui prend du temps et peut être assez onéreux. De plus, en s'écrasant, les parois du boîtier gonflent, ce qui fait augmenter le volume du boîtier. Ainsi, les parois latérales risquent de rester coincées sous le capot. En outre, ce type de dispositif ne fonctionne très bien que lorsque le choc est dirigé horizontalement. En effet, dans le cas où la direction selon laquelle un piéton heurte le projecteur est inclinée, le déplacement du projecteur risque de ne pas se produire. Il se pourrait alors que le piéton heurte le capot qui lui n'est pas nécessairement très déformable.

Afin de pallier ces inconvénient, l'invention a pour objet un projecteur pour véhicule automobile prévu pour dissiper l'énergie cinétique d'un choc qui soit facilement intégrable dans l'architecture d'un véhicule.

L'invention a aussi pour objet un projecteur dont la réparation est facile, rapide et peu onéreuse.

L'invention a de plus pour objet un projecteur qui permet la déformation du capot.

A cet effet, l'invention propose un projecteur de véhicule automobile du type cité ci-dessus, **caractérisé en ce que** le projecteur comporte un compartiment dit "supérieur", constitué par une deuxième glace solidaire d'un réflecteur sur lequel est monté un deuxième moyen d'éclairage, le compartiment supérieur étant mobile entre:
- une position avant choc dans laquelle le compartiment supérieur est lié au boîtier par au moins une liaison fusible et
- une position après choc dans laquelle le compartiment supérieur, après déformation de la liaison fusible, s'est déplacé par rapport au boîtier.

Selon d'autres caractéristiques de l'invention
- Le compartiment supérieur se déplace par un coulissement longitudinal vers l'arrière.
- Le compartiment supérieur se déplace par un basculement vers l'arrière.
- Il est prévu des moyens d'absorption en mousse placés en arrière du compartiment supérieur.
- Des moyens d'absorption sont constitués par un écrasement de la deuxième glace.
- La liaison fusible est un tenon qui est relié au deuxième réflecteur par un élément fusible et qui coopère avec une encoche en queue d'aronde ménagée dans le boîtier.
- Le projecteur comporte un moyen de guidage pour le montage du compartiment supérieur.
- Le moyen de guidage est un bossage ménagé dans la première glace.
- Le compartiment supérieur comporte un feu clignotant et le compartiment inférieur comporte des feux de route, de croisement et de position.

L'invention propose aussi un véhicule comportant un capot sous lequel est agencé le projecteur selon l'invention, **caractérisé en ce que**, en cas de choc, le basculement du compartiment supérieur autorise ensuite l'enfoncement du capot.

D'autres caractéristiques et avantages de l'invention apparaîtront à la lecture de la description d'exemples de réalisation d'un projecteur de véhicule automobile en référence aux dessins annexés dans lesquels ;
- La figure 1 est une vue schématique d'un projecteur de véhicule automobile selon l'invention avant un choc.
- La figure 2 est une vue schématique du projecteur de la figure 1 après un choc.
- La figure 3 est une vue schématique du projecteur selon la direction III-III de la figure 1.

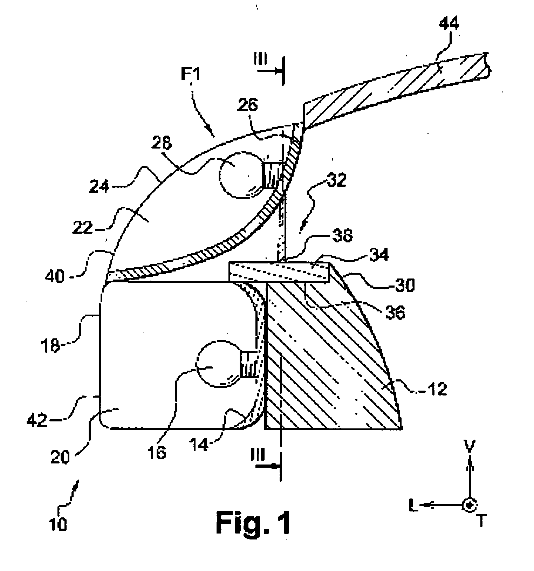

Dans la description qui suit, nous prendrons à titre non limitatif une orientation longitudinale, verticale et transversale indiquée par le trièdre L,V,T de la figure 1.

Des éléments identiques ou analogues sont désignés par les mêmes chiffres de référence.

Tel que représenté à la figure 1, un projecteur 10 comporte un boîtier 12 comprenant au moins un réflecteur 14 et au moins un premier moyen d'éclairage 16 relié à des moyens d'alimentation électrique (non représentés). Le boîtier 12 est fermé par une première glace 18 et forme alors un premier compartiment 20, dit compartiment "inférieur".

Le boîtier 12 est fixé sur un élément de structure (non représenté) du véhicule tel qu'une traverse avant, par exemple.

Le projecteur 10 comporte en outre un compartiment dit "supérieur' 22, placé audessus du compartiment inférieur 20, comprenant une deuxième glace 24 solidaire d'un deuxième réflecteur 26, sur lequel est monté un deuxième moyen d'éclairage 28 raccordé à des moyens d'alimentation électrique (non représentés).

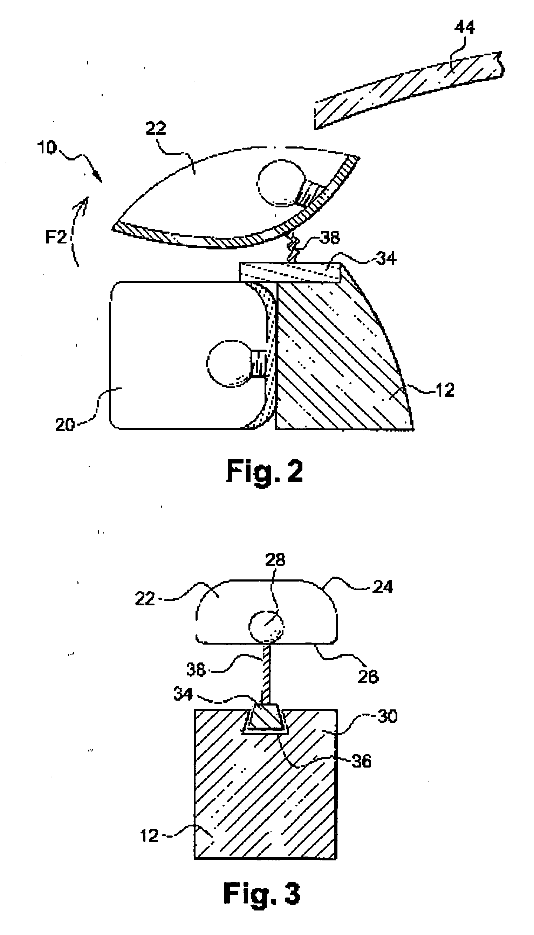

Tel que représenté à la figure 3, le réflecteur 26 du compartiment supérieur 22 est relié à une partie supérieure 30 du boîtier 12 par une liaison fusible 32. Ainsi, par exemple, le réflecteur 26 comporte un ténon 34 qui coopère avec une encoche 36 en queue d'aronde ménagée dans la partie supérieure 30 du boitier 12. Le tenon 34 est relié au réflecteur 26 par l'intermédiaire d'un élément fusible 38. Dans le mode de réalisation décrit ici, le tenon 34 et l'encoche 36 sont d'orientation globalement longitudinale, mais ils pourraient aussi être d'orientation verticale. Un moyen de blocage (non représenté) tel qu'une vis ou un clip, par exemple, permet de bloquer le tenon 34 dans l'encoche 36.

Dans l'exemple décrit ici, le compartiment inférieur 20 comporte des feux de position, de croisement et de route, tandis que le compartiment supérieur 22 comporte un feu clignotant.

En position normale d'utilisation, le compartiment supérieur 22 et le compartiment inférieur 20 forment alors un ensemble continu, les faces externes 40,42 des deux glaces 18,24 se trouvant dans le prolongement l'une de l'autre et affleurant un capot 44.

Tel que représenté à la figure 2, le compartiment supérieur 22 est monté mobile entre deux positions. Un choc indiqué par la flèche F1 provoque la déformation ou en partie la rupture de l'élément fusible 38, de façon que la liaison 32 entre le compartiment supérieur 22 et le boîtier 12 soit conservée, permettant ainsi à la fois le basculement du compartiment supérieur 22 vers l'arrière du véhicule selon le sens indiqué par la flèche F2 et la retenue du compartiment supérieur 22 après le choc.

Ainsi, dans le cas où le projecteur 10 est heurté par un piéton le déplacement du compartiment supérieur 22 permet de dissiper au moins en partie l'énergie cinétique du choc de façon à limiter les dommages corporels. De plus, la retenue du compartiment supérieur 22 présente l'avantage d'éviter que celui-ci ne soit éjecté et ne blesse une personne se trouvant à proximité du véhicule lors du choc.

Il est aussi prévu des moyens supplémentaires d'absorption de l'énergie du choc. En effet le matériau constituant la glace 24 est choisi de façon à pouvoir s'écraser lors du choc ce qui permet d'améliorer l'absorption de l'énergie.

On peut aussi prévoir des moyens d'absorption de l'énergie en arrière du compartiment supérieur 22 comme des absorbeurs en mousse, par exemple (non représentés).

De plus, une fois que le compartiment supérieur 22 a basculé, l'espace vide se trouvant sous le capot 44 autorise la déformation dudit capot 44, ce qui permet encore de dissiper de l'énergie.

Dans une variante de ce mode de réalisation, le tenon 34, aprés déformation de l'élément fusible 38, coulisse dans l'encoche 36, ce qui provoque un déplacement supplémentaire, susceptible de dissiper de l'énergie.

Dans un autre mode de réalisation, non représenté, le compartiment supérieur 22 ne bascule pas mais glisse vers l'arrière, le long du capot 44.

Le projecteur 10 selon l'invention présente donc l'avantage d'être facile à intégrer dans un véhicule de petite taille, car il n'y a pas de grands déplacements du projecteur 10 vers l'arrière mais seulement le déplacement d'une partie de celui-ci.

Le projecteur 10 selon l'invention présente aussi l'avantage de permettre une réparation facile et peu onéreuse. En effet, après basculement du compartiment supérieur 22 à la suite d'un choc, l'opérateur n'a besoin de remplacer qu'une partie du projecteur 10, le compartiment supérieur 22. Il lui suffit alors de retirer les éléments abimés puis de faire coulisser un compartiment supérieur neuf dans la glissière en queue d'aronde 36 et enfin de bloquer le compartiment 22 avec une vis, par example. L'opération est alors rapide et simple.

Avantageusement, un moyen de guidage tel qu'un bossage (non représenté) ménagé dans la première glace 18 peut faciliter le montage du compartiment supérieur 22 sur le boîtier 12.

## Revendications

1. Projecteur (10) perfectionné de véhicule automobile, comportant un boîtier (12) destiné à recevoir un premier moyen d'éclairage (16) et fermé par une première glace (18) de façon à former un compartiment dit "inférieur" (20), **caractérisé en ce que** le projecteur (10) comporte un compartiment dit "supérieur" (22), constitué par une deuxième glace (24) solidaire d'un réflecteur (26) sur lequel est monté un deuxième moyen d'éclairage (28), le compartiment supérieur (22) étant mobile entre:
- une position avant choc dans laquelle le compartiment supérieur (22) est lié au boîtier (12) par au moins une liaison fusible (32) et
- une position après choc dans laquelle le compartiment supérieur (22), après déformation de la liaison fusible (32), s'est déplacé par rapport au boîtier (12).

2. Projecteur (10) selon la revendication 1, **caractérisé en ce que** le compartiment supérieur (22) se déplace par un coulissement longitudinal vers l'arrière.

3. Projecteur (10) selon la revendication 1, **caractérisé en ce que** le compartiment supérieur (22) se déplace par un basculement vers l'arrière.

4. Projecteur (10) selon l'une quelconque des revendications précédentes, **caractérisé en ce qu'**il est prévu des moyens d'absorption en mousse placés en arrière du compartiment supérieur (22).

5. Projecteur (10) selon l'une quelconque des revendications précédentes, **caractérisé en ce que** des moyens d'absorption sont constitués par un écrasement de la deuxième glace (24).

6. Projecteur (10) selon l'une quelconque des revendications précédentes, **caractérisé en ce que** la liaison fusible (32) est un tenon (34) qui est relié au deuxième réflecteur (28) par un élément fusible (38) et qui coopère avec une encoche (36) en queue d'aronde ménagée dans le boîtier (12).

7. Projecteur (10) selon l'une quelconque des revendications précédentes, **caractérisé en ce que** le projecteur (10) comporte un moyen de guidage pour le montage du compartiment supérieur (22).

8. Projecteur (10) selon la revendication précédente, **caractérisé en ce que** le moyen de guidage est un bossage ménagé dans la première glace (18).

9. Projecteur (10) selon l'une quelconque des revendications précédentes, **caractérisé en ce que** le compartiment supérieur (22) comporte un feu clignotant et le compartiment inférieur (20) comporte des feux de route, de croisement et de position.

10. Véhicule comportant un capot (44) sous lequel est agencé le projecteur (10) selon l'une quelconque des revendications précédentes, **caractérisé en ce que,** en cas de choc, le basculement du compartiment supérieur (22) autorise ensuite l'enfoncement du capot (44).

## Claims

1. Improved motor vehicle headlight (10), comprising a casing (12) designed to receive a first lighting means (16) and closed by a first lens (18) so as to form a compartment (20) called the "bottom" compartment, **characterized in that** the headlight (10) comprises a compartment (22) called the "top" compartment, consisting of a second lens (24) fixedly attached to a reflector (26) on which a second lighting means (28) is mounted, the top compartment (22) being movable between:
- a pre-impact position in which the top compartment (22) is connected to the casing (12) by at least one fusible connection (32) and
- a post-impact position in which the top compartment (22), after deformation of the fusible connection (32), is moved relative to the casing (12).

2. Headlight (10) according to Claim 1, **characterized in that** the top compartment (22) moves by sliding longitudinally rearwards.

3. Headlight (10) according to Claim 1, **characterized in that** the top compartment (22) moves by tilting rearwards.

4. Headlight (10) according to any one of the preceding claims, **characterized in that** foam absorption means are placed behind the top compartment (22).

5. Headlight (10) according to any one of the preceding claims, **characterized in that** absorption means are formed by a crumpling of the second lens (24).

6. Headlight (10) according to any one of the preceding claims, **characterized in that** the fusible connection (32) is a tenon (34) that is connected to the second reflector (28) by a fusible element (38) and that interacts with a dovetail notch (36) made in the casing (12).

7. Headlight (10) according to any one of the preceding claims, **characterized in that** the headlight (10) comprises a guidance means for the mounting of the top compartment (22).

8. Headlight (10) according to the preceding claim, **characterized in that** the guidance means is a boss made in the first lens (18).

9. Headlight (10) according to any one of the preceding claims, **characterized in that** the top compartment (22) comprises a turn signal light and the bottom compartment (20) comprises high beam, low beam and side lights.

10. Vehicle comprising a hood (44) beneath which the headlight (10) according to any one of the preceding claims is arranged, **characterized in that**, in the event of impact, the tilting of the top compartment (22) subsequently allows the hood (44) to collapse.

## Patentansprüche

1. Verbesserter Kraftfahrzeug-Scheinwerfer (10), der ein Gehäuse (12) aufweist, das dazu bestimmt ist, ein erstes Leuchtmittel (16) aufzunehmen, und von einer ersten Abschlussscheibe (18) verschlossen wird, um ein so genanntes "unteres" Abteil (20) zu bilden, **dadurch gekennzeichnet, dass** der Scheinwerfer (10) ein so genanntes "oberes" Abteil (22) aufweist, das aus einer zweiten Abschlussscheibe (24) besteht, welche fest mit einem Reflektor (26) verbunden ist, auf den ein zweites Leuchtmittel (28) montiert ist, wobei das obere Abteil (22) beweglich ist zwischen:
- einer Position vor einem Aufprall, in der das obere Abteil (22) mit dem Gehäuse (12) über mindestens eine Sicherungsverbindung (32) verbunden ist, und
- einer Position nach einem Aufprall, in der das obere Abteil (22) sich nach Verformung der Sicherungsverbindung (32) bezüglich des Gehäuses (12) verschoben hat.

2. Scheinwerfer (10) nach Anspruch 1, **dadurch gekennzeichnet, dass** das obere Abteil (22) sich durch ein Längsgleiten nach hinten verschiebt.

3. Scheinwerfer (10) nach Anspruch 1, **dadurch gekennzeichnet, dass** das obere Abteil (22) sich durch ein Kippen nach hinten verschiebt.

4. Scheinwerfer (10) nach einem der vorhergehenden Ansprüche, **dadurch gekennzeichnet, dass** Absorptionsmittel aus Schaumstoff vorgesehen sind, die hinter dem oberen Abteil (22) angeordnet sind.

5. Scheinwerfer (10) nach einem der vorhergehenden Ansprüche, **dadurch gekennzeichnet, dass** Absorptionsmittel aus einem Zusammendrücken der zweiten Abschlussscheibe (24) bestehen.

6. Scheinwerfer (10) nach einem der vorhergehenden Ansprüche, **dadurch gekennzeichnet, dass** die Sicherungsverbindung (32) ein Zapfen (34) ist, der mit dem zweiten Reflektor (28) über ein Sicherungselement (38) verbunden ist und der mit einer schwalbenschanzförmigen Aussparung (36) zusammenwirkt, die im Gehäuse (12) ausgebildet ist.

7. Scheinwerfer (10) nach einem der vorhergehenden Ansprüche, **dadurch gekennzeichnet, dass** der Scheinwerfer (10) ein Führungsmittel für den Einbau des oberen Abteils (22) aufweist.

8. Scheinwerfer (10) nach dem vorhergehenden Anspruch, **dadurch gekennzeichnet, dass** das Führungsmittel eine Wölbung ist, die in der ersten Abschlussscheibe (18) ausgebildet ist.

9. Scheinwerfer (10) nach einem der vorhergehenden Ansprüche, **dadurch gekennzeichnet, dass** das obere Abteil (22) ein Blinklicht enthält, und das untere Abteil (20) ein Fernlicht, ein Abblendlicht und ein Standlicht enthält.

10. Fahrzeug, das eine Haube (44) aufweist, unter der der Scheinwerfer (10) nach einem der vorhergehenden Ansprüche angeordnet ist, **dadurch gekennzeichnet, dass** bei einem Aufprall das Kippen des oberen Abteils (22) anschließend das Eindrücken der Haube (44) erlaubt.
